Europäisches Patentamt

European Patent Office

Office européen des brevets

(11) Veröffentlichungsnummer: **0 149 719**

**A2**

(12)

# EUROPÄISCHE PATENTANMELDUNG

(21) Anmeldenummer: **84110964.8**

(22) Anmeldetag: **13.09.84**

(51) Int. Cl.⁴: **G 01 B 11/14**

(30) Priorität: **29.09.83 DE 3335396**

(43) Veröffentlichungstag der Anmeldung:
**31.07.85 Patentblatt 85/31**

(84) Benannte Vertragsstaaten:
**AT BE CH DE FR GB IT LI LU NL SE**

(71) Anmelder: **Siemens Aktiengesellschaft**
**Berlin und München Wittelsbacherplatz 2**
**D-8000 München 2(DE)**

(72) Erfinder: **Bodlaj, Viktor, Dr.**
**Werinherstrasse 69**
**D-8000 München 90(DE)**

(54) Verfahren zum berührungslosen Messen des Abstandes eines bestimmten Punktes einer Oberfläche von einer Bezugsebene und Vorrichtung zur Durchführung eines solchen Verfahrens.

(57) Es wird ein Verfahren zum berührungslosen Messen des Abstandes eines bestimmten Punktes (P) einer Oberfläche (OW) von einer Bezugsebene (B) beschrieben, wobei die Oberfläche von zwei aus verschiedenen Richtungen einfallenden, auf eine in der Bezugsbene (B) festgelegte gemeinsame Abtaststrecke (A) gerichteten und in Richtung dieser Abtaststrecke (A) hin- und herbewegten Lichtstrahlenbündeln (RL) abgetastet wird. Sowohl bei der Hinals auch bei der Herbewegung eines jeden Lichtstrahlenbündels wird jeweils ein Zeitpunktpaar $(t_b, t'_{r1}; t'_{l1}, t_c; t'_c, t'_{l2}; t'_{l2}, t'_b)$ erfaßt, das aus einem Bezugszeitpunkt $(t_b, t_c, t'_c, t'_b)$ und einem Meßzeitpunkt $(t'_{r1}, t'_{l1}, t'_{l2}, t'_{r2})$ besteht. Die bei der Hin- und Herbewegung (R) der beiden Lichtstrahlenbündel jeweils erfaßten Bezugszeitpunke $(t_b, t'_b)$ werden jeweils dann erfaßt, wenn dieses eine Lichtstrahlenbündel (R) momentan auf den einen Endpunkt (ER) der Abtaststrecke (A) ausgerichtet ist, während die anderen Bezugszeitpunkte $(t_c, t'_c)$ jeweils dann erfaßt werden, wenn das andere der beiden Lichtstrahlenbündel (L) momentan auf den anderen Endpunkt (EL) der Abtaststrecke (A) ausgerichtet ist. Der Abstand d des bestimmten Punktes (P) der Oberfläche (OW) von der Bezugsebene (B) wird aus der Summe der vier Zeitdauern bestimmt, die durch die vier erfaßten Zeitpunktpaare bestimmt sind. Die Summe ist unabhängig von der Beschaffenheit der Oberfläche und entspricht einem fehlerfreien Meßwert.

FIG 1.

EP 0 149 719 A2

./...

FIG 2

SIEMENS AKTIENGESELLSCHAFT     Unser Zeichen
Berlin und München             VPA   83 P 1 7 8 5 E

**BEZEICHNUNG GEÄNDERT.**

**Siehe Titelseite**

Verfahren zum berührungslosen Messen des Abstandes eines bestimmten Punktes auf der Oberfläche von einer Bezugs- ebene und Vorrichtung zur Durchführung eines solchen Ver- fahrens

Die vorliegende Erfindung betrifft ein Verfahren zum berührungslosen Messen des Abstandes eines bestimmten Punktes einer Oberfläche von einer Bezugsebene nach dem Oberbegriff des Patentanspruchs 1 und eine Vorrichtung zur Durchführung eines solchen Verfahrens.

Ein Verfahren der genannten Art ist beispielsweise aus der DE-OS 28 42 669 (VPA 78 P 7162) bekannt. Bei diesem bekannten Verfahren wird die Oberfläche deshalb von zwei in verschiedenen Einfallsrichtungen auf die Bezugsebene einfallenden Lichtstrahlenbündeln abgetastet, weil es besonders bei stark unebenen Oberflächen, beispielsweise bei Flächenprofilen, vorkommen kann, daß die Mes- sung aufgrund einer bestimmten Streulichtcharakteristik des von der Oberfläche zurückgeworfenen Lichts und aufgrund eines ungünstigen Einfallswinkels bezüglich der Oberfläche vorkommen kann, daß kein Meßsignal entsteht und daher die Messung unterbrochen wird. Durch die Verwendung der unter verschiedenen Einfallsrichtungen einfallenden Lichtstrahlenbündel können auch stark unebene Oberflächen ohne Störung lückenlos vermessen werden.

Generell benötigt ein Verfahren der genannten Art zum Messen des Abstandes eines bestimmten Punktes einer Oberfläche von einer Bezugsebene ein nur unter einer Einfallsrichtung einfallendes hin- und herbewegtes Licht-Ed 1 Sti/15.9.83 strahlenbündel. Prinzipiell benötigt man zur Ermittlung des Abstandes auch nur einen Meßzeitpunkt und einen Bezugszeitpunkt und damit auch nur eine Abtastung in einer Richtung.

Aus der DE-OS 30 36 886 (VPA 80 P 7179) ist es bereits bekannt, daß bei den Verfahren zum berührungslosen Messen des Abstandes eines bestimmten Punktes einer Oberfläche von einer Bezugsebene der allgemeinen Art auch noch ein Problem auftritt, das von einer anderne Art ist, als das in der erstgenannten DE-OS 28 42 669 angegebene Problem. Dieses andersartige Problem besteht darin, daß für die in dem räumlich festgelegten begrenzten Meßfenster gemessene zeitlich ansteigende und wieder abfallende integrale Intensität des von der Oberfläche zurückgeworfenen Lichts des jeweiligen Lichtstrahlenbündels, dessen Strahlen das Meßfenster überstreichen, eine symmetrische Glockenkurve angenommen wird. Dies ist aber nur dann der Fall, wenn das Streuvermögen der Oberfläche gleichmäßig ist. Ändert sich dieses Streuvermögen von Ort zu Ort, können Verzerrungen in der Glockenkurve der gemessenen Intensität auftreten. Auch die Granulation des gestreuten Laserlichts, die bei geschliffenen Oberflächen besonders ausgeprägt ist, kann zu solchen Verzerrungen der Glockenkurve führen. Diese Verzerrungen zeigen sich in der Regel darin, daß die verzerrte Glockenkurve im Vergleich zur symmetrischen Glockenkurve eine steilere und eine flachere Flanke aufweist. Dies führt zu Meßfehlern, wie sie in der DE-OS 30 36 886 geschildert sind. Dort ist auch angegeben, wie diese Meßfehler durch Differentiation der Glockenkurve elektronisch beseitigt werden können.

Aufgabe der vorliegenden Erfindung ist es, aufzuzeigen, wie bei einem Verfahren zum berührungslosen Messen des Abstandes eines bestimmten Punktes einer Oberfläche von einer Bezugsebene durch die Verzerrung der Glockenform der Intensitätskurve verursachte Fehler auf optischem Wege wesentlich reduziert werden können, so daß das
Verfahren von der Oberflächenbeschaffenheit weitgehend unabhängig wird.

Diese Aufgabe wird gelöst durch ein Verfahren der eingangs genannten Art, welches die im kennzeichnenden Teil
des Anspruchs 1 angegebenen Merkmale aufweist.

Zweckmäßige Ausgestaltungen des erfindungsgemäßen Verfahrens gehen aus den Unteransprüchen 2 bis 5 hervor.

Zweckmäßige Vorrichtungen zur Durchführung des erfindungsgemäßen Verfahrens, bei dem die Oberfläche gleichzeitig von zwei unter verschiedenen Einfallsrichtungen
auf die Bezugsebene einfallenden hin- und herbewegten
Lichtstrahlenbündeln abgetastet wird, gehen aus den
Unteransprüchen 6 bis 8 hervor.

Die Erfindung wird beispielhaft anhand der Figuren in der
folgenden Beschreibung näher erläutert. Von den Figuren
zeigen:

Figur 1 den prinzipiellen Aufbau einer Vorrichtung zur
        Durchführung des von der Oberflächenbeschaffenheit weitgehend unabhängigen Verfahrens,
Figur 2 Impulsdiagramme I bis VI über der Zeit t, welche
        das Verfahren sowohl für symmetrische Meßsignale
        als auch für verzerrte Meßsignale veranschaulichen, und
Figur 3 und Figur 4 zwei Vorrichtungen gemäß Figur 1, die
        zeigen, wie die Lichtquelle, die Bezugsdetektoren, der Lichtablenker, der Strahlteiler, die
        Umlenkeinrichtung und der Detektor mit dem
        Meßfenster kompakt angeordnet werden können.

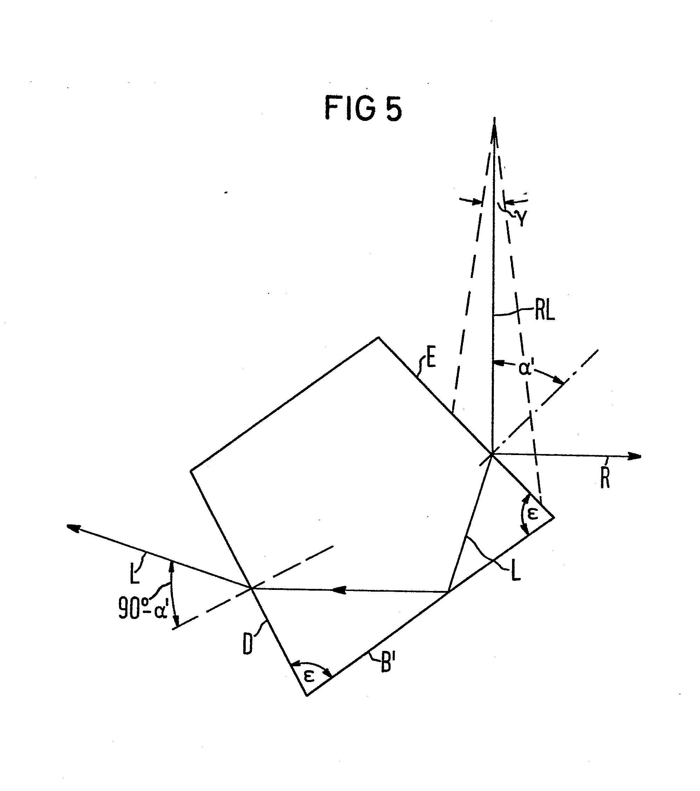

Figur 5 ein Prisma, das als Strahlteiler und Umlenkspiegel dient.

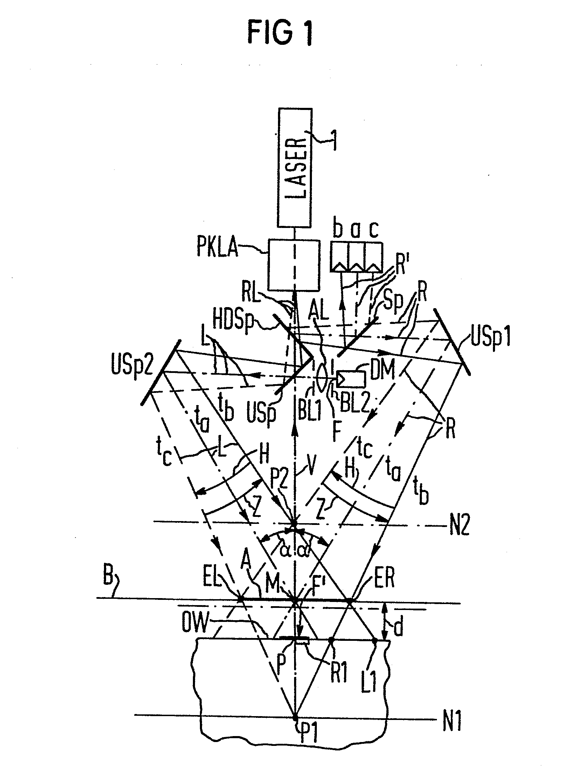

In der Vorrichtung nach Figur 1 sendet ein Laser 1 einen Laserstrahl RL vertikal nach unten aus, der von einem Lichtablenker PKLA aus der Vertikalen nach links und rechts ausgelenkt wird. Dieser hin- und hergelenkte Laserstrahl RL trifft auf einen zur Vertikalen geneigten halbdurchlässigen Spiegel HDSp, der eine Hälfte der Lichtenergie durchläßt und die andere Hälfte in Form eines Teilstrahlenbündels nach rechts reflektiert.

Im Strahlengang des durch den halbdurchlässigen Spiegel HDSp hindurchgegangenen Teilstrahlenbündels L ist im Winkel zur Vertikalen ein aus einer beiderseits verspiegelten Glasscheibe bestehender teildurchlässiger Umlenkspiegel USp angeordnet, der das Teilstrahlenbündel L nach links ablenkt.

In jedem der nach rechts und links reflektierten Teilstrahlenbündel R und L ist jeweils ein äußerer Umlenkspiegel USp1 bzw. USp2 angeordnet, der das betreffende Teilstrahlenbündel R bzw. L zur Bezugsebene B hin umlenkt. Diese Bezugsebene steht vertikal zur Zeichenebene, wobei angenommen ist, daß das Strahlenbündel RL und die Teilstrahlenbündel R, L in oder parallel zur Zeichenebene hin- und hergelenkt werden.

Zwischen dem halbdurchlässigen Spiegel HDSp und dem äußeren Umlenkspiegel USp1 ist im Strahlengang des betreffenden Teilstrahlenbündels R ein zusätzlicher teildurchlässiger Spiegel Sp angeordnet, der einen geringen Teil der Lichtenergie nach oben in Richtung dreier Detektoren b, a, c herauslenkt, die bei der Hin- und Herbewegung des rechten Teilstrahlenbündels R von dem herausgelenkten Teilstrahlenbündel R' nacheinander überstrichen werden. Jeder dieser Detektoren b, a, c gibt, wenn er von dem hin- und herbewegten herausreflektierten Teilstrahlenbündel R' getroffen wird, jeweils ein Meßsignal ab, das einen Bezugszeitpunkt $t_b$, $t_a$ bzw. $t_c$ bestimmt, in dem das Teilstrahlenbündel R' und damit auch der Laserstrahl RL und das Teilstrahlenbündel L jeweils eine bestimmte Richtung einnehmen. In der Figur 1 sind die Strahlenbündel gewissermaßen in drei überlagerten Momentaufnahmen in diesen drei entsprechenden Richtungen dargestellt.

Im Bezugszeitpunkt $t_b$ sind die beiden Teilstrahlenbündel R und L so ausgerichtet, daß sie einen Punkt ER der Bezugsebene B treffen. Diese so ausgerichteten Teilstrahlenbündel sind durchgezogen gezeichnet.

Im Zeitpunkt $t_a$ sind die beiden jetzt strichpunktiert dargestellten Teilstrahlenbündel R und L so ausgerichtet, daß sie einen Punkt M' der Bezugsebene treffen. In diesem Zeitpunkt $t_a$ sind der Laserstrahl RL vertikal und die beiden nach links und rechts sich ausbreitenden Teilstrahlenbündel R und L genau waagerecht ausgerichtet. Der Zeitpunkt $t_a$ dient im wesentlichen zur Kontrolle des Bewegungsablaufs der hin- und herbewegten Teilstrahlenbündel R und L.

Im Bezugszeitpunkt $t_c$ sind die beiden jetzt gestrichelt dargestellten Teilstrahlenbündel R und L so ausgerichtet, daß sie einen Punkt EL der Bezugsebene (B) treffen.

Die Punkte ER, M' und EL definieren in der Bezugsebene B eine Abtaststrecke A, die von den beiden Teilstrahlenbündeln R und L gemeinsam überstrichen wird, und die in den Punkten ER und EL endet, wobei der Punkt M den Mittelpunkt dieser gemeinsamen Abtaststrecke A bildet. Dieser Mittelpunkt M' wird im Zeitpunkt $t_a$ von den beiden Teilstrahlenbündeln R und L aus verschiedenen Richtungen unter dem gleichen Einfallswinkel $\alpha$ getroffen.

0149719
83 P 1785 E

Aufgrund der beschriebenen Optik bewegen sich die beiden Teilstrahlenbündel R und L gleichzeitig und gleichzeitig in der gleichen Richtung hin und her und in jedem Moment sind sie auch gleichzeitig auf einen gemeinsamen Punkt der Abtaststrecke A ausgerichtet. Bei Betrachtung einer einzigen solchen Hin- und Herbewegung sei angenommen, daß sich die beiden Teilstrahlenbündel R und L zunächst in der Richtung H hin- und dann in der entgegengesetzten Richtung Z wieder herbewegen.

Bei der Hinbewegung in Richtung H erzeugt zuerst der Detektor b ein Meßsignal, das den Bezugszeitpunkt $t_b$ festlegt. Dann gibt der Detektor a sein Meßsignal ab, das den Zeitpunkt $t_a$ bestimmt. Danach erzeugt der Detektor c ein Meßsignal, das den anderen Bezugszeitpunkt $t_c$ festlegt. Danach kehrt sich die Bewegungsrichtung um und die beiden Teilstrahlenbündel R und L bewegen sich in der Richtung Z wieder her.

Bei dieser Herbewegung erzeugt zuerst der Detektor c ein Meßsignal, das einen Zeitpunkt $t'_c$ anzeigt. Nach dem der Detektor a sein Meßsignal abgegeben hat, erzeugt der getroffene Detektor b ein Meßsignal, das einen Bezugszeitpunkt $t'_b$ festlegt.

Die Bewegung der hin- und herbewegten Teilstrahlenbündel R und L erfolgt so, daß sie sowohl bei der Hin- als auch bei der Herbewegung in jedem Moment, in dem sie auf einen gemeinsamen Punkt der gemeinsamen Abtaststrecke A ausgerichtet sind, eine jeweils gleich große Momentangeschwindigkeit haben. d.h. daß jedem Punkt der Abtaststrecke A ein allen Teilstrahlenbündeln und Bewegungsrichtungen gemeinsamer Momentangeschwindigkeitsbetrag zugeordnet ist, den die hin- und herbewegten Teilstrahlenbündel R und L jeweils in dem Moment einnehmen, in dem sie jeweils auf diesen Punkt der Abtaststrecke A gerichtet sind.

Dadurch wird erreicht, daß jede beliebig vorgegebene Teilstrecke der Abtaststrecke von beiden Lichtstrahlenbündeln in beiden Bewegungsrichtungen in jeweils der gleichen Zeit durchlaufen wird.

Durch die Bezugszeitpunkt $t_b$ und $t_c$ sind auch zwei Nullebenen N1 und N2 definiert, von denen die eine N1 unterhalb und die andere N2 oberhalb der Bezugsebene B angeordnet ist und die beide parallel zur Bezugsebene B verlaufen. Beide Nullebenen sind durch Punkte P1 und P2 definiert, in denen sich das Teilstrahlenbündel R und das Teilstrahlenbündel L schneiden würden, wenn der Bezugszeitpunkt $t_c$ für das eine Teilstrahlenbündel mit dem Bezugszeitpunkt $t_b$ für das andere Teilstrahlenbündel zusammenfallen würden.

Durch diese beiden Punkte P1 und P2 ist eine ortsfeste Achse V definiert, auf der das ein Meßfenster F bildende Detektorfenster eines Fotodetektors DM angeordnet ist. Die Achse V wird durch den beidseitig verspiegelten Umlenkspiegel USp nach rechts umgelenkt und das Detektorfenster F befindet sich zusammen mit einer zwischen zwei spaltförmigen Blenden BL1 und BL2 angeordneten Abbildungsoptik AL, die vor dem Fenster angeordnet sind, auf dem umgelenkten Teil der Verbindungsachse V.

Zum Messen des Abstandes eines bestimmten Punktes einer Oberfläche eines Meßobjekts muß dieses so zwischen die beiden Nullebenen N1 und N2 in zumindest geringfügigem Abstand von der Bezugsebene B gebracht werden, daß seine Oberfläche von der Achse V in einem Punkt P getroffen wird, dessen Abstand d von der Bezugsebene B gemessen wird. Dieser Punkt P liegt im Zentrum eines von der Abbildungsoptik AL auf der Oberfläche OW abgebildeten Meßfläche F', das von den beiden Teilstrahlenbündeln R und L

0149719

während der Abtastung in beiden Richtungen durchlaufen wird. Wenn die Oberfläche in der Meßfläche F' ein gleichmäßiges Streuvermögen aufweist, entsteht durch die mathematische Faltung der Intensitätsverteilung des in dem von der Oberfläche zurückgeworfenen Licht betreffenden Teilstrahlenbündels mit der Spaltfunktion des Fotodetektors und der Abbildungsoptik am Fotodetektor DM ein Meßsignal mit zeitlich symmetrischem Verlauf in Form einer symmetrischen Glockenkurve.

Ist das Streuvermögen oder die Oberflächenbeschaffenheit in der Meßfläche F' nicht gleichmäßig, so kann die symmetrische Glockenform des Meßsignals verzerrt werden. Nimmt man beispielsweise an, daß der Bereich der Meßfläche F' rechts vom Punkt P hell ist, während der links von dem Punkt P liegende Bereich der Meßfläche dunkel ist, so entsteht bei der Abtastung in der Richtung H ein Meßsignal, das steiler ansteigt, als es abfällt und dessen Maximum in Richtung ansteigender Flanke verschoben. Bei der Abtastung in der Richtung Z sind die Verhältnisse genau umgekehrt, d.h. die ansteigende Flanke des Meßsignals ist flacher als die abfallende Flanke und das Maximum ist in Richtung abfallender Flanke verschoben. Da zum Durchlaufen einer beliebigen Teilstrecke der Abtaststrecke A das in der Richtung H bewegte Teilstrahlenbündel R die gleiche Zeit braucht wie das in der Gegenrichtung Z bewegte Teilstrahlenbündel L, sind die für beide Richtungen erhaltenen Glockenkurven spiegelsymmetrisch zueinander.

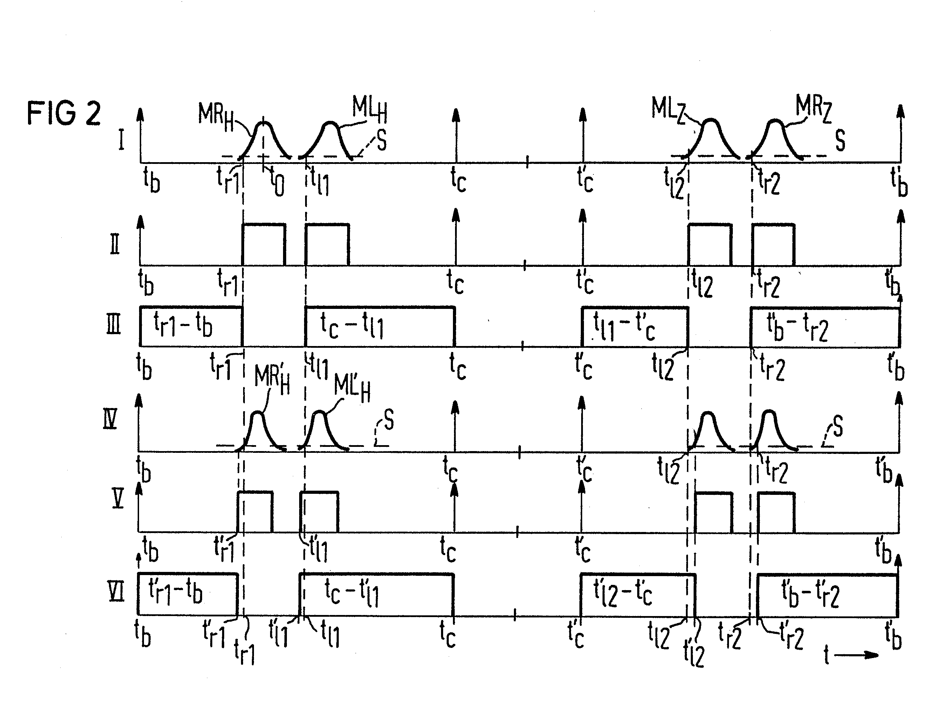

Zur Erläuterung der Wirkungsweise der Vorrichtung nach Figur 1 und des ihr zugrundeliegenden Prinzips wird auf Figur 2 Bezug genommen. Die Gewinnung des aus vier Zeitdauern bestehenden Meßwertes, der ein Maß für den Abstand d des Punktes P der Oberfläche OW von der Bezugsebene B ist, wird zunächst anhand der Diagramme I bis III für den Fall von Meßsignalen in symmetrischer Glockenform erläutert.

Im Bezugszeitpunkt $t_b$ schneiden sich die beiden Teilsrahlenbündel R und L im rechten Endpunkt ER der Abtaststrecke A. Da die Oberfläche OW unter der Bezugsebene
B angeordnet ist, trifft das rechte Teilstrahlenbündel
diese Oberfläche OW in einem Punkt R1, der näher am Punkt
P liegt als der Punkt L1, in dem das linke Teilstrahlenbündel L die Oberfläche OW trifft. Dies bedeutet, daß bei
der Hinbewegung in Richtung H das rechte Teilstrahlenbündel R früher auf die Meßfläche F' trifft, als das linke
Teilstrahlenbündel L.

Dementsprechend erscheint im Diagramm I der Figur 2 das
bei der Hinbewegung in Richtung·H von dem rechten Teilstrahlenbündel R verursachte symmetrisch glockenförmige
Meßsignal $MR_H$ zeitlich früher, als das von dem linken
Teilstrahlenbündel L verursachte Meßsignal $ML_H$.

Wenn sich nach dem Erreichen des linken Endpunktes EL der
Abtaststrecke A zum Bezugszeitpunkt $t_c$ die Bewegungsrichtung wieder umkehrt und der linke Endpunkt EL durch
die sich jetzt in der Herrichtung Z bewegenden Teilstrahlenbündel R und L im Bezugszeitpunkt $t'_c$ wieder erreicht
worden ist, haben sich die Verhältnisse genau umgekehrt.
Das bedeutet, daß bei der Herbewegung in der Richtung Z
das von dem linken Teilstrahlenbündel L verursachte
symmetrisch glockenförmige Meßsignal $ML_Z$ früher auftritt,
als das Meßsignal $MR_Z$ des rechten Teilstrahlenbündels R.

Die symmetrisch glockenförmigen Meßsignale $MR_H$, $ML_H$, $ML_Z$
und $MR_Z$ werden mit Hilfe eines Schwellwertelements mit
einer vorgegebenen Schwelle S in Rechteckimpulse umgewandelt, wie sie im Diagramm II der Figur 2 dargestellt
sind. Die durch die Vorderflanken dieser Rechteckimpulse
bestimmten Zeitpunkte $t_{r1}$, $t_{11}$, $t_{12}$, $t_{r2}$ stellen jeweils
erfaßte Meßzeitpunkte dar. Davon gelten die Meßzeitpunkte
$t_{r1}$ und $t_{r2}$ für das rechte Teilstrahlenbündel R und die

Meßzeitpunkt $t_{11}$ und $t_{12}$ gelten für das linke Teilstrahlenbündel L.

Aus den vier erfaßten Meßzeitpunkten und den vier erfaßten Bezugszeitpunkten werden vier Zeitdauern zwischen jeweils einem Meßzeitpunkt und einem Bezugszeitpunkt ermittelt. Dabei werden für das rechte Teilstrahlenbündel R neben ·den von ihm verursachten Meßzeitpunkten $t_{r1}$ und $t_{r2}$ nur die Bezugszeitpunkte herangezogen oder erfaßt, die dem rechten Endpunkt ER der Abtaststrecke A zugeordnet sind, d.h. die Bezugszeitpunkte $t_b$ und $t'_b$. Analog werden für das linke Teilstrahlenbündel L neben den von ihm verursachten Meßzeitpunkten $t_{11}$ und $t_{12}$ nur die Bezugszeitpunkte $t_c$ und $t'_c$ erfaßt oder herangezogen, die dem linken Endpunkt EL der Abtaststrecke A zugeordnet sind.

Die vier auf diese Weise eindeutig ermittelten Zeitdauern $t_{r1}-t_b$, $t_c-t_{11}$, $t_{12}-t'_c$ und $t'_b-t_{r2}$ sind im Diagramm III der Figur 2 durch Rechteckimpulse angedeutet, deren Länge der jeweiligen Zeitdauer entspricht.

Werden diese vier Zeitdauern $t_{r1}-t'_b$, $t_c-t_{11}$, $t_{12}-t'_c$ und $t'_b-t_{r2}$ addiert, so erhält man einen exakten Meßwert M, der durch vier geteilt genau der Zeitdauer zwischen dem Zeitpunkt des Maximums einer Glockenkurve $MR_H$, $ML_H$, $ML_Z$, $MR_Z$ und dem ihr zugeordneten Bezugszeitpunkt $t_b$, $t_c$, $t'_c$ bzw. $t'_b$ entspricht, und der Abstand d des auf der Achse V liegenden Punktes P der Oberfläche .OW vo. der Bezugsebene B entspricht.

Das Diagramm IV in Figur 2 entspricht dem Diagramm I mit dem Unterschied, daß die beiden Meßsignale verzerrt sind, wobei beispielsweise angenommen ist, daß sie in der bereits beschriebenen Weise verzerrt sind, bei welcher bei der Hinbewegung in Richtung H die ansteigende Flanke

0149719
83 P 17 8 5 E

steiler ist als die abfallende Flanke ist, während bei
der Herbewegung in Richtung Z die ansteigende Flanke
flacher ist und die abfallende Flanke steiler. Diese den
symmetrischen Meßsignalen $MR_H$, $ML_H$, $ML_Z$ und $MR_Z$ entsprechenden verzerrten Meßsignale sind im Diagramm IV mit
$MR'_H$, $ML'_H$, $ML'_Z$ bzw. $MR'_Z$ bezeichnet. Die weiteren
Diagramme V und VI entsprechen den Diagrammen II und III.

Die Verzerrung des Meßsignals hat zur Folge, daß die den
Meßzeitpunkten $t_{r1}$, $t_{11}$, $t_{12}$, $t_{r2}$ im symmetrischen Fall
entsprechenden Meßzeitpunkte $t'_{r1}$, $t'_{11}$, $t'_{12}$ bzw. $t'_{r2}$
nicht mehr mit den ersteren zusammenfallen und damit eine
Meßwertverfälschung auftritt. Insbesondere gilt

$$t'_{r1}-t_b < t_{r1}-t_b, \quad t_c-t_{11} < t_c-t'_{11}, \quad t_{12}-t'_c <$$

$$< t'_{12}-t'_c, \quad t'_b-t'_{r2} < t'_b-t_{r2}$$

und $t_{r1}-t'_{r1} = t_{11}-t'_{11} = \Delta t_1$, $t'_{12}-t_{12} = t'_{r2}-t_{r2} = \Delta t_2$,

sodaß für die entsprechende Summe aus den vier Zeitdauern

$$(t'_{r1}-t_b) + (t_c-t'_{11}) + (t'_{12}-t'_c) + (t'_b-t'_{r2}) = M$$

gilt. Das heißt, diese Summe ist von der Form der Meßsignale $MR'_H$, $ML'_H$, $ML'_Z$ und $MR_Z$ unabhängig und liefert
daher stets den richtigen Meßwert.

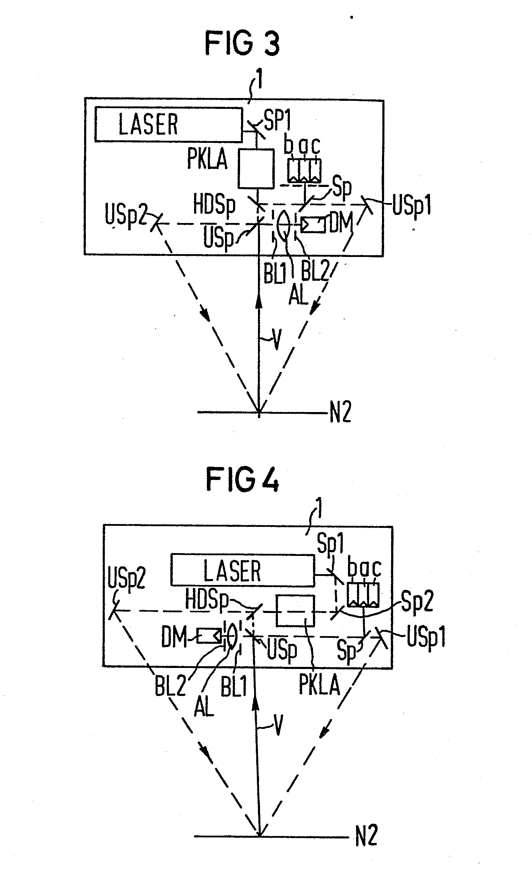

In den Figuren 3 und 4 sind zwei kompakte Anordnungen der
Vorrichtung nach Figur 1 dargestellt. Die Anordnung nach
Figur 3 unterscheidet sich von der Anordnung nach Figur 1
nur dadurch, daß zwischen dem Laser 1 und dem Strahlablenker PKLA noch ein Umlenkspiegel Sp1 angeordnet ist,
der den vom Laser ausgesandten Laserstrahl um 90° zum
Strahlteiler hin umlenkt. Dadurch wird eine kompaktere
Anordnung erreicht, weil der Laser 1 waagerecht angeordnet werden kann.

Bei der Anordnung nach Figur 4 ist der Laser 1 ebenfalls waagerecht angeordnet. Der von ihm ausgesandte Laserstrahl wird durch zwei zwischen dem Laser 1 und dem Strahlablenker PKLA angeordnete Umlenkspiegel Sp1 und Sp2 um 180° umgelenkt, so daß der Lichtablenker PKLA ebenfalls waagerecht angeordnet ist. Der halbdurchlässige Spiegel HDSp ist so angeordnet, daß das durch ihn hindurchgegangene Teilstrahlenbündel direkt auf den Umlenkspiegle USp2 trifft, während das reflektierte Teilstrahlenbündel nach unten auf den Umlenkspiegel USp gelenkt wird, der es nach rechts in Richtung des äußeren Umlenkspiegels USp1 umlenkt. Entsprechend wird die Achse V von dem Umlenkspiegel USp nach links umgelenkt und daher sind die Blenden BL1, BL2, die Abbildungsoptik AL und der Meßdetektor DM links vom Umlenkspiegel USp angeordnet.

In einer zweckmäßigen Ausführungsform einer Vorrichtung nach Figur 1 oder 3 ist für den halbdurchlässigen Spiegel HDSp und den Umlenkspiegel USp ein Prisma mit einer Basisfläche B und zwei Seitenflächen ED vorgesehen, bei dem die Seitenflächen E und D mit der Basisfläche B' jeweils den Winkel

$$\eta = 90° - (45° - \arcsin \; \alpha'/n))/2 )$$

einschließt. Die Seitenflächen E ist im Strahlengang des im Winkel $\gamma$ hin- und herbewegten Laserstrahls RL so angeordnet, daß der Laserstrahl unter dem Einfallswinkel $\alpha'$ auf die Seitenfläche E einfällt. Diese Seitenfläche ist zugleich mit einem halbdurchlässigen Belag versehen, der den Strahlteiler HDSp bildet. Zweckmäßigerweise wird der Einfallswinkel $\alpha' = 45°$ gewählt. Das reflektierte Teilstrahlenbündel R wird dadurch im rechten Winkel zum Laserstrahl RL ausgestrahlt.

Das in das Prisma eindringende Teilstrahlenbündel L wird an der Basisfläche B' des Prismas totalreflektiert, und tritt an der Seitenfläche D gebrochen unter dem Ausfalls-

winkel 90° - $\alpha$' nach links aus. Dieses Teilstrahlenbündel L breitet sich daher leicht schräg nach oben aus. Zweckmäßigerweise ist die Seitenfläche D mit einem reflexmindernden Belag versehen.

Die Art der Strahlteilung durch das Prisma erleichtert die Einstellung der gleichen optischen Wege vom Strahlablenker PKLA bis zu einer Nullebene N1 oder N2 oder zur Bezugsebene B für beide Strahlenbündel R und L.

Zum Umlenken der Achse V kann ein vom Umlenkspiegel USp verschiedener Umlenkspiegel vorgesehen sein.

8 Patentansprüche
5 Figuren

Q149719

83 P 1785 E

Patentansprüche

1. Verfahren zum berührungslosen Messen des Abstandes eines bestimmten Punktes einer Oberfläche von einer Bezugsebene, wobei die Oberfläche von zwei aus verschiedenen Richtungen einfallenden, auf eine in der Bezugsebene festgelegte gemeinsame Abtaststrecke gerichteten und in Richtung dieser Abtaststrecke hin- und herbewegten Lichtstrahlenbündeln abgetastet wird, derart, daß im Bereich der Abtaststrecke die beiden Lichtstrahlenbündel, die eine jeweils zu durchlaufende Strecke bei der Hinbewegung in der gleichen Zeit durchlaufen, dieselbe Strecke auch bei der Herbewegung wieder in dieser Zeit durchlaufen, wobei sowohl bei der Hin- als auch bei der Herbewegung eines jeden Lichtstrahlenbündels jeweils ein Zeitpunktpaar erfaßt wird, das aus einem Bezugszeitpunkt und einem Meßzeitpunkt besteht, wobei der Bezugszeitpunkt anzeigt, wann das betreffende hin- oder herbewegte Lichtstrahlenbündel auf einen zugeordneten Endpunkt der Abtaststrecke ausgerichtet ist und der Meßzeitpunkt anzeigt, wann dieses betreffende Lichtstrahlenbündel die jeweils ansteigende oder abfallende Flanke der zeitlich ansteigenden und/oder abfallenden, in einem räumlich festgelegten begrenzten Meßfenster gemessene integrale Intensität des von der Oberfläche zurückgeworfenen Lichts des betreffenden Lichtstrahlenbündels, dessen Strahlen das Meßfenster überstreichen, einen vorbestimmten Intensitätspegel erreicht, wobei die Zeitdauer zwischen einem Meßzeitpunkt und einem Bezugszeitpunkt eines jeden Zeitpunktpaares ein Maß für den Abstand des bestimmten Punktes der Oberfläche von der Bezugsebene ist, d a - d u r c h g e k e n n z e i c h n e t , daß die bei der Hin- und Herbewegung eines (R) der beiden Lichtstrahlenbündel (R, L) jeweils erfaßten Bezugszeitpunkte ($t_b$, $t'_b$) jeweils dann erfaßt werden, wenn dieses eine Licht-

0149719
83 P 1785 E

strahlenbündel (R) momentan auf den einen Endpunkt (ER) der Abtaststrecke (A) ausgerichtet ist, während die bei der Hin- und Herbewegung des anderen Lichtstrahlenbündels (L) jeweils erfaßten Bezugszeitpunkte ($t_c$, $t'_c$) jeweils dann erfaßt werden, wenn das andere der beiden Lichtstrahlenbündel (L) momentan auf den anderen Endpunkt (EL) der Abtaststrecke (A) ausgerichtet ist, und daß zur Ermittlung des Abstandes (d) des bestimmten Punktes (P) der Oberfläche (OW) von der Bezugsebene (B) vier Zeitpunktpaare ($t_b$, $t'_{r1}$; $t'_{11}$, $t_c$; $t_c$, $t'_{12}$; $t'_{r2}$, $t'_b$) erfaßt werden, von denen zwei bei einer Hin- und Herbewegung des einen Lichtstrahlenbündels (R) und die anderen zwei bei einer Hin- und Herbewegung des anderen Lichtstrahlenbündels (L) erfaßt werden und je erfaßtem Zeitpunktpaar die Zeitdauer ($t'_{r1}-t_b$, $t_c-t'_{11}$, $t'_{12}-t'_c$, $t'_b-t'_{r2}$) zwischen dem Meßzeitpunkt ($t'_{r1}$, $t'_{11}$, $t'_{12}$, $t'_{r2}$) und dem Bezugszeitpunkt ($t_b$, $t_c$, $t'_c$, $t'_b$) ermittelt wird, und daß der Abstand (d) aus der Summe dieser vier Zeitdauern ermittelt wird (Fig. 1, Fig. 2 VI)

2. Verfahren nach Anspruch 1, d a d u r c h   g e - k e n n z e i c h n e t ,  daß die momentan auf den Mittelpunkt (M) der Abtaststrecke (A) gerichteten, aus verschiedenen Richtungen einfallenden Lichtstrahlenbündel (R, L) unter dem gleichen Einfallswinkel ($\alpha$) einfallen.

3. Verfahren nach Anspruch 1 oder ·2, d a d u r c h   g e k e n n z e i c h n e t ,  daß die beiden Lichtstrahlenbündel (R, L) gleichzeitig bewegt werden.

4. Verfahren nach Anspruch 3, d a d u r c h   g e - k e n n z e i c h n e t ,  daß die beiden Lichtstrahlenbündel (R, L) gleichzeitig hin- und herbewegt werden.

5. Verfahren nach Anspruch 4, d a d u r c h g e -
k e n n z e i c h n e t , daß die beiden gleichzeitig
hin- und herbebewegten Lichtstrahlenbündel (R, L) so
bewegt werden, daß sie jeweils gleichzeitig auf einen
Punkt der Ataststrecke (A) momentan ausgerichtet sind.

6. Vorrichtung zum berührungslosen Messen des Abstandes
eines bestimmten Punktes auf der Oberfläche von einer
Bezugsebene, mit einer Lichtquelle zur Erzeugung eines
Lichtstrahlenbündels, mit einem Strahlablenker zum
periodischen Ablenken des Lichtstrahlenbündels in einer
Ebene, mit zwei ortsfesten lichtempfindlichen Detektoren
zum Erfassen zweier Bezugszeitpunkte, in denen das
Lichtstrahlenbündel zwei bestimmte Positionen einnimmt,
zwischen denen es sich hin- und herbewegt, mit einer
optischen Umlenkeinrichtung zum Umlenken der Lichtstrahlen in Richtung einer die Ebene senkrecht schneidenden
Bezugsebene, derart, daß sie aus verschiedenen Richtungen einfallen, mit einem Detektorfenster eines lichtempfindlichen Detektors zum Erfassen eines Meßzeitpunktes,
das im Bereich des von einer Oberfläche zurückgeworfenen
Lichts des hin- und herbewegten Lichtstrahlenbündels
ortsfest angeordnet ist und mit einer Auswerteeinrichtung
zum Auswerten von zwischen erfaßten Meßzeitpunkten und
erfaßten Bezugszeitpunkten gemessenen Zeitdauern, zur
Durchführung eines Verfahrens nach Anspruch 4 oder 5,
d a d u r c h g e k e n n z e i c h n e t , daß im
Strahlengang des hin- und herbewegten Lichtstrahlenbündels (RL) ein Strahlteiler (HDSp) angeordnet ist, der
das Lichtstrahlenbündel (RL) in zwei in der Ebene hin-
und herbewegte Teilstrahlenbündel (R, L) aufteilt,
daß die Umlenkeinrichtung (USp, USp1, USp2) so ausgebildet ist, daß sie die beiden Teilstrahlenbündel (R, L)
aus verschiedenen Richtungen derart auf die Bezugsebene
(B) lenkt, daß die beiden umgelenkten, in der Ebene

0149719

hin- und herbewegten Teilstrahlenbündel (R, L) in der Bezugsebene (B) in den Bezugszeitpunkten auf die gleichen Punkte (ER, EL) der Bezugsebene (B) ausgerichtet sind, welche die Endpunkte der Abtaststrecke (A) bilden, und daß die Auswerteeinrichtung eine Summiereinrichtung aufweist, welche die bei jeweils einer Hin- und Herbewegung der beiden Lichtstrahlenbündel aus den jeweils erfaßten Zeitpunktpaaren ermittelten Zeitdauern zwischen einem Meßzeitpunkt ($t_{r1}$, $t_{r2}$, $t_{11}$, $t_{12}$) und einem im Falle des einen Lichtstrahlenbündels (R) auf den einen Endpunkt (ER) bezogenen Bezugszeitpunkt ($t_b$, $t'_b$) und im Falle des anderen Lichtstrahlenbündels auf den anderen Endpunkt (EL) der Abtaststrecke (A) bezogenen Bezugszeitpunkt ($t_c$, $t'_c$) summiert.

7. Vorrichtung nach Anspruch 6, d a d u r c h   g e - k e n n z e i c h n e t , daß die Umlenkeinrichtung (USp, USp1, USp2) einen im Strahlengang eines (L) der beiden vom Strahlteiler (HDSp) erzeugten Teilstrahlenbündel (R, L) angeordneten Umlenkspiegel (USp) zum Umlenken dieses Teilstrahlenbündels (L) in eine zur Ausbreitungsrichtung des anderen Teilstrahlenbündels (R) entgegengesetzte Richtung und zwei äußere Umlenkspiegel (USp1, USp2) zum Umlenken der beiden in entgegengesetzten Richtungen sich ausbreitenden Teilstrahlenbündel (R, L) in Richtung zur Bezugsebene (B) aufweist.

8. Vorrichtung nach Anspruch 7, d a d u r c h g e k e n n z e i c h n e t , daß für den Strahlteiler (HDSp) und den Umlenkspiegel (USp) ein Prisma mit einer Basisfläche (B') und zwei Seitenflächen (E, D) vorgesehen ist, bei dem die Seitenflächen (E, D) mit der Basisfläche (B') jeweils den Winkel

$$\eta = 90° - (45° - arc(\sin \alpha' /n))/2$$

einschließen, wobei eine Seitenfläche (E) im Strahlengang des Lichtstrahlenbündels (RL) so anzuordnen ist, daß dieses Lichtstrahlenbündel (RL) unter dem Einfallswinkel ( $\alpha'$ ) einfällt, wobei diese Seitenfläche mit einem teildurchlässigen Belag versehen ist und den Strahlteiler (HDSp) bildet, und wobei die Basisfläche (B') zusammen mit der anderen Seitenfläche (D) den Umlenkspiegel (USp) bildet.

FIG 1

0149719

1/4

FIG 2

I

$MR_H$ $ML_H$ S

$t_b$ $t_{r1}$ $t_0$ $t_{l1}$ $t_c$ $t'_c$ $t_{l2}$ $t_{r2}$ $t'_b$

$MLZ$ $MRZ$ S

II

$t_b$ $t_{r1}$ $t_c$ $t'_c$ $t_{l2}$ $t_{r2}$ $t'_b$

III

| $t_{r1}-t_b$ | $t_c-t_{l1}$ | $t_{l1}-t'_c$ | $t'_b-t_{r2}$ |

$t_b$ $t_{r1}$ $t_{l1}$ $t_c$ $t'_c$ $t_{l2}$ $t_{r2}$ $t'_b$

IV

$MR'_H$ $ML'_H$ S

$t_b$ $t_c$ $t'_c$ $t_{l2}$ $t_{r2}$ $t'_b$

S

V

$t_b$ $t'_{r1}$ $t'_{l1}$ $t_c$ $t'_c$ $t'_b$

VI

| $t'_{r1}-t_b$ | $t_c-t'_{l1}$ | $t'_{l2}-t'_c$ | $t'_b-t'_{r2}$ |

$t_b$ $t'_{r1}$ $t_{r1}$ $t'_{l1}$ $t_{l1}$ $t_c$ $t'_c$ $t_{l2}$ $t'_{l2}$ $t_{r2}$ $t'_{r2}$ $t'_b$

$t \longrightarrow$

0149719

## FIG 3

## FIG 4

FIG 5